# EUROPÄISCHE PATENTSCHRIFT

(11) **EP 1 236 564 B1**
(45) Veröffentlichungstag und Bekanntmachung des Hinweises auf die Patenterteilung: **26.04.2006**
(21) Anmeldenummer: 02003411.2
(22) Anmeldetag: 14.02.2002
(51) Int. Cl.: B29C 70/54

(54) **Verfahren zur Herstellung von Bauteilen aus faserverstärktem Kunststoff und entsprechender Hohlkörper**
Process for making components of fibre reinforced plastic and corresponding hollow body
Procédé pour réaliser des pièces en matière plastique renforcés par des fibres et corps creux correspondant

(30) Priorität: 15.02.2001 DE 10106923
(43) Veröffentlichungstag der Anmeldung: 04.09.2002
(73) Patentinhaber: BPW Bergische Achsen Kommanditgesellschaft, 51674 Wiehl (DE)
(72) Erfinder: Schürmann, Helmut, Prof. Dr.Ing., 67133 Maxdorf (DE); Ehleben, Max, Dipl.-Ing., 38102 Braunschweig (DE); Denzin, Roman, Dipl.-Ing., 85238 Petershausen (DE)
(74) Vertreter: Christophersen, Ruth

(56) Entgegenhaltungen:
- FR-A- 2 108 923
- US-A- 4 849 150
- MICHAELI W ET AL: "Combined moulding speeds hollow parts" REINFORCED PLASTICS, ELSEVIER ADVANCED TECHNOLOGY, NEW YORK, NY, US, Bd. 40, Nr. 3, 1. März 1996 (1996-03-01), Seiten 40-43, XP004141258 ISSN: 0034-3617

## Beschreibung

Die vorliegende Erfindung betrifft ein Verfahren zur Herstellung von Bauteilen aus faserverstärktem Kunststoff sowie nach diesem Verfahren hergestellte Bauteile, wie Hohlkörper, Antriebswellen, Blattfedern und Federlenker.

Verbundkörper aus faserverstärkten Kunststoffen finden in vielen Bereichen der Technik Anwendung, in denen hochfeste Bauteile bei möglichst geringem Baugewicht eingesetzt werden sollen. Als Matrixsysteme für die Verstärkungsfasern werden duroplastische und thermoplastische Kunststoffe eingesetzt. Als Bauteile können z. B. Hohlkörper, insbesondere Druckbehälter, Rohre, Antriebswellen, Blattfedern, Federlenker, usw. genannt werden.

Insbesondere die thermoplastischen Matrixsysteme zeigen eine Reihe von Vorteilen, da die Ausgangsmaterialien unbegrenzt lagerfähig sind, sie unter hygienischen Arbeitsbedingungen verarbeitet werden können und außerdem recyclingfähig und oft erheblich preiswerter sind als entsprechende duroplastische Systeme. Zur Herstellung von Bauteilen aus thermoplastischen endlosfaserverstärkten Kunststoffen sind verschiedene Verfahren bekannt.

In Fortschrittsberichte VDI, Reihe 2: Fertigungstechnik Nr. 393, VDI-Verlag, 1996 wird ein Verfahren zum Thermoplast-Wickeln beschrieben, worin ein Gemisch aus Verstärkungsfasern und thermoplastischem Matrixmaterial, zum Beispiel thermoplastische Prepregs oder Hybridfasern, im konventionellen Wickelverfahren auf einem thermoplastischen Kernrohr abgelegt wird. Der zugeführte Faden wird mit den bereits vorher auf dem Kern abgelegten Schichten verschweißt. Die hierzu erforderliche Schmelzenergie muss kontinuierlich während des Wickelvorgangs zugeführt werden. Für eine gute Laminatqualität ist es notwendig, dass die thermoplastische Schmelze unter Druck erstarrt. Die Konsolidierung der thermoplastischen Matrix erfolgt entweder allein durch die Fadenspannung oder mit Hilfe geeigneter Andrückvorrichtungen.

Aus der DE 42 157 56 A1 wird ein Verfahren zur Herstellung von Hohlkörpern nach dem sogenannten Schmelzdruckformen offenbart, worin ein thermoplastisches Kernrohr mit Fasern, thermoplastischen Prepregs oder Hybridfasern belegt wird. Bei rotationssymmetrischen Bauteilen erfolgt die Faserablage im Wickelverfahren. Der so hergestellte Vorformling wird von außen erwärmt und anschließend in ein Werkzeug gelegt, druckdicht verschlossen und mit Innendruck beaufschlagt, was die Konsolidierung des Matrixmaterials bewirkt.

In der EP 835745 A2 wird ein Verfahren zur Herstellung von rohrförmigen Hohlkörpern durch Profillarminierungsziehen offenbart, worin zunächst ein thermoplastisches Kernrohr mit Fasern bewickelt wird. In das bewickelte Hohlprofil wird ein konisch geformter Dorn eingebracht, dessen Querschnitt dem des Hohlprofils geometrisch ähnlich ist. Anschließend wird der rohrförmige Hohlkörper ganz oder teilweise aufgeschmolzen, wobei ein Teil des die innere Schicht des rohrförmigen Hohlkörpers bildenden thermoplastischen Kunststoffs in die Faserschicht hineingepreßt wird und auf diese Weise eine mit Fasern verstärkte äußere Schicht des Hohlkörpers bildet.

In der DE 4.3 00 208 A1 wird ein Verfahren zur Herstellung von Hohlkörpern, insbesondere Rohren, rohrförmigen Torsionsstäberi, Druckbehältern usw. aus faserverstärkten Kunststoffen offenbart, wobei wenigstens zwei Schichten mit unterschiedlich zur Längsrichtung orientierte Fasern eingearbeitet sind. Bei diesem Verfahren wird das bewickelte Rohr in ein Werkzeug eingebracht und mit dem Werkzeug in eine Rotationsbewegung um die Rohrlängsachse versetzt. Das thermoplastische Kernrohr wird auf Temperaturen oberhalb der Schmelztemperatur erwärmt und die durch die Rotationsbewegung erzeugten Zentrifugalkräfte wirken auf die Thermoplastschmelze und erzeugen so einen Konsolidierungsdruck.

In der US 4,849,150 wird ein Verfahren zur Herstellung von Bauteilen aus faserverstärktem Kunststoff offenbart, worin Batiststreifen und kontinuierliche Glasfasem mit einer definierten Spannung auf einen Kern gewickelt werden. Der so umwickelte Kern wird in eine Form gebracht, in welche geschmolzenes Kunststoffharz unter Druck eingespritzt wird. Der flüssige Kunststoff wird über einen zentralen Spritzkanal eingespritzt, welcher anschließend mit einem Stopfen verschlossen wird, so dass das flüssige Harz in die geschichteten Fasern eindringen kann. Die Fasern werden langsam mit Harz getränkt.

Ein Nachteil des voranstehend beschriebenen Standes der Technik ist, dass sich in der Regel nur dünnwandige Hohlkörper herstellen lassen.

Ein Kernproblem bei der Herstellung von dickwandigen Hohlkörpern aus thermoplastischen, endlosfaserverstärkten Kunststoffen ist, dass eine Konsolidierung des Laminats durch ein Preßverfahren nicht möglich ist, da mit dem Preßvorgang stets eine Verringerung der Laminatdicke verbunden ist. Das hat zur Folge, dass bei Hohlquerschnitten entweder der innere Umfang vergrößert oder der äußere Umfang verkleinert werden muss. Ersteres führt bei großen Wanddicken dazu, dass der Faserwinkel der Verstärkungsfasern, welche im allgemeinen in einem Wickel- oder Flechtprozess aufgebracht werden, sich in Umfangsrichtung vergrößert und sich die Wicklungen damit axial zusammenziehen und die einzelnen Schichten somit aufeinander abgleiten müssten. Dies ist jedoch aufgrund der hohen Reibung zwischen den Fasern mit konventionellen Techniken nicht möglich. Die Verkleinerung des äußeren Umfangs führt bei konstanter Länge des Profils zu Faserwelligkeiten, die bei thermoplastischen Matrizes eine starke Verringerung der Parallel-Druckfestigkeit im Endprodukt bedeuten würden.

Auch können sich bei der Konsolidierung des Laminats Hohlräume bilden, wenn das thermoplastische Material aufgrund des hohen Fließwiderstandes nicht in diese Hohlräume gelangt beziehungsweise wenn der eingebrachte Druck nicht ausreichend hoch ist. Bei größeren Wanddicken ergeben sich entsprechend größere Fließwege, was bedeutet, dass entweder die Zeiten, die die Schmelze für das Zurücklegen des Fließweges benötigt, sehr hoch sind oder aber Drücke benötigt werden, die mit Verfahren aus dem Stand der Technik nicht realisierbar sind.

Der vorliegenden Erfindung lag die Aufgabe zugrunde, ein Verfahren zur Herstellung von Bauteilen aus faserverstärktem Kunststoff zur Verfügung zu stellen, mit dem es möglich ist, dickwandige Bauteile mit hoher Laminatqualität herzustellen.

Gegenstand der vorliegenden Erfindung ist ein Verfahren der Eingangs genannten Art, bei dem
- ein mit Fasern belegter Kern in eine Form eingebracht wird und
- Kunststoff oder Kunststoffvorprodukte in flüssiger Form über den Kern im wesentlichen senkrecht zu den Fasern in den Formraum eingeleitet wird,
- der eingebrachte Kunststoff aushärtet und das Bauteil aus der Form entfernt wird, sowie ein nach diesen Verfahren erhaltener Höhlkörper gemäß Ansprurch 15.

Das erfindungsgemäße Verfahren ermöglicht die Herstellung von Bauteilen aus faserverstärktem Kunststoff mit relativ hoher Wanddicke. Vorzugsweise sind die Bauteile endlosfaserverstärkt. Es konnte beobachtet werden, dass sich die Verstärkungsfaserwicktung, insbesondere wenn der Kunststoff bzw. das Kunststoffvorprodukt unter hohem Druck in den Formraum eingeleitet wird, trotz der Reibung zwischen den Fasern aufweitet, wodurch die Fasern gestreckt und konsolidiert werden. Man kann davon ausgehen, dass die Ursache hierfür der sich in der Form vorliegende Druck ist, der sich aufbaut, wenn die Kunststoffmaterialien in die Form eingebracht werden und in die Faserwicklung eindringen.

Der Kunststoff bzw. die Kunststoffvorprodukte werden erfindungsgemäß in flüssiger Form in die Form eingeleitet. Im Rahmen der vorliegenden Erfindung bedeutet "in flüssiger Form", daß die eingesetzten Materialien unter den Verarbeitungsbedingungen, wie Temperatur und Druck, fließfähig bzw. spritzbar sind. Die Kunststoffmaterialien sind vorzugsweise viskos, denn es hat sich gezeigt, dass sich dadurch ein hoher Konsolidierungsdruck aufbauen lässt. Die Kunststoffmaterialien weisen bevorzugt dynamische Viskositäten größer als etwa 10 Pa·s auf.

Nach dem Einleiten des Kunststoffs wird dieser gehärtet. In einer besonders bevorzugten Ausführungsform der vorliegenden Erfindung erfolgt das Aushärten unter Druck, so dass eine Konsolidierung des Laminats stattfindet. Der Konsolidierungsdruck ist bevorzugt senkrecht zur Faserwicklung, insbesondere senkrecht zur Wandung des herzustellenden Bauteils.

Konsolidierung bedeutet im Rahmen der vorliegenden Erfindung ein Verfestigen der flüssigen Materialien, wie Abkühlen einer Schmelze oder Polymerisationsreaktionen von Kunststoffvorprodukten, beispielsweise unter Druck, wobei die Faserwicklung verdichtet wird. Es wurde festgestellt, dass durch den in der Form auftretenden Innendruck während der Konsolidierung eine Faserstraffung erreicht wird, d.h. Faserwelligkeiten, die bei der Wicklung der Fasern auftreten können, werden ausgeglichen. Die Straffung bzw. Ausrichtung der Fasern ermöglicht eine höhere Lastaufnahme der Fasern, was wiederum zu einer höheren Stabilität des Bauteils insgesamt führt.

Im ersten Schritt wird ein Kern, der in der Regel Werkzeug und nicht Bestandteil des herzustellenden Bauteils ist, mit Fasern belegt. Die Fasern werden auf dem Kern geschichtet, vorzugsweise wird dieser ist mit den Fasern umwickelt.

Als Fasern, die im erfindungsgemäßen Verfahren eingesetzt werden können, sind insbesondere alle sogenannten Endlosfasern geeignet. Beispiele sind natürliche und synthetische Fasern auf Kohlehydrat- oder Aminosäurebasis, Kohlenstofffasern, Glasfasern, Aramidfasern, keramische Fasern wie Siliciumcarbid, Bornitrit und Silikatfasern, Fasern aus Polyetherketon, vollaromatischem Polyamid, Polyethylen, Polypropylen, Polybutylenterephthalat, Polyamid, Polysulfon, Polyetherketon sowie beliebige Kombinationen der Voranstehenden.

In einer weiteren Ausgestaltung der vorliegenden Erfindung werden sogenannte thermoplastische Prepregs, duroplastische Prepregs oder Hybridfasern eingesetzt. Bei den Prepregs handelt es sich um einen relativ groben Faden mit 1000 oder mehr Filamenten, die mit einer Schmelze (durch einen Pultrusionsprozess) oder einem Pulver des Matrixmaterials getränkt sind.

Die vorzugsweise ebenfalls einsetzbaren Hybridgarne können beispielsweise nach dem aus der EP-B 156 599 bekannten Verfahren hergestellt werden, indem man die beiden Faserarten getrennt voneinander durch Anblasen mit Luft spreizt und dann durch Zusammenführen über Rollen oder Stäbe vermischt. Das Spreizen kann grundsätzlich auch durch einen Flüssigkeitsstrahl, durch elektrostatische Aufladung oder durch Separieren der Einzelfilamente durch Kämme erfolgen. Hier erhält man eine innige Vermischung der Einzelfilamente, so dass im Mischgarn Thermoplast- und Verstärkungsfasern statistisch gleichmäßig verteilt sind. Eine solche innige Vermischung ist aber nicht für alle Anwendungszwecke notwendig; man kann auch auf das Spreizen der Ausgangsfasern verzichten und diese nach einfachen Methoden vermischen, z.B. indem man sie zusammen über Rollen oder Stäbe zieht oder gemeinsam in einem Luftstrom verwirbelt. Hybridfasern bestehen üblicherweise aus 10 bis 90 Volumenprozent Verstärkungsfasern und 90 bis 10 Volumenprozent Thermoplastfasern.

Weiterhin können duroplastische Prepregs eingesetzt werden, die mit dem erfindungsgemäßen Verfahren konsolidiert werden. Bei duroplastischen Prepregs handelt es sich um einen groben Faden oder sogar Bänder mit mehreren Millimetern Breite mit 1000 oder mehr Filamenten, die mit Vorprodukten des duroplastischen Matrixmaterials getränkt sind.

Die auf den Kern aufgebrachten Fasern bzw. Hybridfasern oder Prepregs werden anschließend mit zusätzlich unter Druck zugeführtem flüssigen Kunststoffmaterial konsolidiert.

Bei der Verwendung von Hybridfasern oder Prepregs muss nur soviel Matrix zusätzlich zugeführt werden, wie zum Auffüllen der Hohlräume im Formraum nötig ist. Um die hierfür benötigte Zeit zu verkürzen, können spezielle Wicklungstechniken gewählt werden, die ein Tränken zwischen den einzelnen abgelegten Fäden hindurch erleichtern. Auf diese Weise kann die Tränkung der Fäden selbst nahezu an allen Querschnittpunkten und am gesamten Umfang des einzelnen Fadens beginnen. Derartige Aufbauten erhöhen üblicherweise die Größe und/oder die Anzahl der Zwischenräume zwischen den Fäden und begünstigen so das Eindringen des flüssigen Kunststoffmaterials zwischen den Fäden hindurch. Beispiele für Faseraufbauten sind Wickelmuster mit hohen Musterzahlen, also vielen Überschneidungspunkten, Wickelmuster mit Abständen zwischen den einzelnen abgelegten Fäden bis hin zur Korbwicklung oder die Verwendung von Zwirnen anstelle von Rovings, da festgestellt wurde, dass sich der Querschnitt von Zwirnen beim Wickeln weniger abplattet und so mehr Zwischenräume für die Tränkung zwischen den einzelnen Zwirnen hindurch bildet. Bei der Verwendung von Hybridfasern wird nur soviel Matrix zugeführt, wie zum Ausfüllen der Hohlräume nötig ist. Die Anschließende Konsolidierung der Hybridfaserwicklung erfolgt durch Wärmeeintrag, d.h. durch Aufschmelzen der Thermoplastfasern der Hybridgarne.

Der im folgenden verwendete Ausdruck Kunststoffmaterial umfasst sowohl die einsetzbaren Kunststoffe als auch die Kunststoffvorprodukte.

Als Kunststoffe werden vorzugsweise thermoplastische Kunststoffe eingesetzt, d.h. die bei höheren Temperaturen im wesentlichen ohne Zersetzung schmelzen. Als thermoplastische Kunststoffe können thermoplastische Homopolymere, Copolymere und/oder Polymerblends eingesetzt werden. Als Beispiele können abgewandelte Naturstoffe, wie Cellulosenitrat, Celluloseacetat, Celluloseether und Cellutosemischether, Polyamide, Polycarbonate, Polyester, Polyphenylenoxide, Polysulfone, Polyvinylacetale, Polyolefine, lonomere, Polyvinylchlorid (PVC), Polyvinylidenchlorid, Polymethylmethacrylat, Polyacrylnitril, Polystyrol, Polyacetale, Fluorkunststoffe, Polyvinylalkohol, Polyvinylacetat, Poly-p-xylylen, Polyetherketone, AcrylnitrilButadien-Styrol-Copolymere, Styrol-Acrylnitril-Copolymere, Polyterephthalate, lineare Polyurethane, chlorierte Polyether usw. genannt werden. Besonders bevorzugt sind Polyolefine, wie Polyethylen oder Polypropylen sowie Polyamide, wie Polyamid 6.6. Dabei kann es sich sowohl um Homopolymere als auch um Copolymere der Voranstehenden mit untergeordneten Anteilen einpolymerisierter Comonomerer handeln.

Selbstverständlich können auch zur Herstellung von Bauteilen aus thermoplastischen Kunststoffen zunächst die Monomere zugeführt werden und sich ein Polymerisationsschritt anschließen.

Sollen Bauteile aus anderen Kunststoffen, wie z. B. Duroplasten, hergestellt werden, so hat es sich als vorteilhaft erwiesen, die flüssigen Kunststoffvorprodukte einzusetzen, d.h. Monomere oder Monömergemische, Prepolymere, etc., die im Anschluß an den Tränkungsvorgang in an sich bekannter Weise unter Bildung des Polymers (Kunststoffs) aushärten können. Beispiele für Duroplaste sind die sog. Gießharze, wie Epoxidharze, Methacrylatharze, ungesättigte Polyesterharze, Isocyanatharze und Phenacrylatharze, sowie die üblicherweise aus Prepolymeren herstellbaren Phenolharze, Melamin-Formaldehydharze, vernetzten und linearen Polyurethane, usw. In Abhängigkeit vom gewünschten Konsolidierungseffekt kann es erforderlich sein, die Viskosität der duroplastischen Kunststoffvorprodukte, die üblicherweise sehr niedrige Viskositäten aufweisen, in an sich bekannter Weise zu erhöhen. Bevorzugt sind dynamische Viskositäten größer als etwa 10 Pa·s.

Die als Kunststoffvorprodukte einsetzbaren Monomere oder Prepolymere werden vorzugsweise aus solchen ausgewählt, die sich durch Polyaddition und/oder radikalische Polymerisation polymerisieren lassen. Das Aushärten, d.h. die Polymerisation, kann thermisch und/oder durch Einsatz von sog. Härtern und/oder Polymerisationskatalysatoren/-initiatoren erfolgen.

Das Kunststoffmaterial kann auch sog. Funktionskunststoffe, wie Polytetrafluorethylene (PTFE), enthalten oder daraus bestehen, auch können ihnen Additive, die die tribologischen Eigenschaften verbessern oder abrasiv wirken, zugesetzt werden, wie MoS, Ruß, Al₂O₃, TiO₂, ZrO₂, Mischoxide aus Al₂O₃, und/oder ZrO₂, Carbide, wie SiC und B₄C, Nitride, wie BN, Diamant und/oder magnetisch aktive Partikel usw.

Erfindungsgemäß wird der mit Fasern belegte Kern in eine Form eingebracht. Die Zufuhr des Kunststoffmaterials erfölgt von innen nach außen in Richtung auf die Form. Vorzugsweise ist der Kern hohl mit Zuführkanälen darin, so dass die Fasern mit dem flüssigen Kunststoffmaterial von innen nach außen getränkt und durchtränkt werden. Die Verteilung des Kunststoffmaterials im Formraum kann erleichtert werden, wenn die Zufuhrkanäle in Nuten münden, welche über den Kern verteilt sind.

Es hat sich als besonders vorteilhaft erwiesen, wenn die Form, in die der mit Fasern belegte Kern eingebracht wird, eine Druckform ist, so das sich durch die Zufuhr des flüssigen Kunststoffs und/oder Kunststoffvorproduktes im Formraum ein Druck aufbauen kann, wodurch Bauteile mit hoher Laminatqualität erhalten werden können.

Der Druck, mit welchem der flüssige Kunststoff und/oder das Kunststoffvorprodukt in die Form eingespritzt wird, beträgt vorzugsweise etwa von 5 bis 1.000 bar. Das erfindungsgemäße Verfahren ist sowohl zur Herstellung von geschlossenen Hohlkörpern als auch von sogenannten offenen Hohlkörpern, also überwiegend flächigen Bauteilen, geeignet. Insbesondere bei der Herstellung von flächigen Bauteilen hat das erfindungsgemäße Verfahren gegenüber dem Stand der Technik einige Vorteile. Gemäß dem Stand der Technik werden flächige Bauteile beispielsweise über Preßverfahren hergestellt, welche jedoch den Nachteil aufweisen, dass Flächen, die annähernd parallel zur Preßrichtung liegen, nicht oder nur schlecht konsolidiert werden können. Im erfindungsgemäßen Verfahren werden die Verstärkungsfasern beziehungsweise das flächige Verstärkungsfaser-Halbzeug in eine Form eingelegt und gegebenenfalls fixiert. Durch das Eindringen des flüssigen Kunststoffs und/oder Kunststoffvorproduktes senkrecht zu den Fasern wirkt der Konsolidierungsdruck auch senkrecht zur Laminatebene auf allen Flächen des Bauteils. Es wurde festgestellt, dass durch den von innen wirkenden Druck die Fasern gestrafft werden, was eine besonders gute Lastaufnahme derselben im Bauteil gewährleistet.

Um eine ausreichende Konsolidierung zu gewährleisten, hat es sich insbesondere bei Verwendung von thermoplastischen Kunststoffen als vorteilhaft erwiesen, wenn der Kern und/oder die Form beheizt werden, um die Thermoplastschmelze oberhalb des Schmelzbereich des thermoplastischen Kunststoffs zu halten. Die Beheizung kann beispielsweise über eine elektrische Widerstand- oder Strahlenheizung erfolgen, bei der der Wärmefluß durch die Werkzeugwandung in die Wicklung erfolgt. Geeignet ist auch eine Hochfrequenzheizung, in der das verwendete Werkzeug aus Kern und Form als Zylinderkondensator eingesetzt werden. Bei der Hochfrequenzheizung bildet der Kern eine zylindrische Elektrode und das Außenwerkzeug die Gegenelektrode. Das so angelegte elektrische Wechselfeld kann den in die Wicklung eingespritzten thermoplastischen Kunststoff auf hoher Temperatur halten beziehungsweise, wenn mit thermoplastischem Kunststoff getränkte Fasern verwendet werden, das aufgewickelte, thermoplastische Material schmelzen. Eine Hochfrequenzheizung hat den Vorteil, dass nur ein dünner Randbereich des Außenwerkzeugs erwärmt werden muss, was nachfolgend den Vorteil hat, dass auch der Abkühlprozess schneller abläuft. Insbesondere wenn eine Hochfrequenz dazu eingesetzt wird, hat es sich als vorteilhaft erwiesen, dem thermoplastischen Kunststoff mikroskopisch kleine, elektroleitfähige und/oder magnetisch aktive Partikel, wie z.B. Kohlenstaub, Metallteilchen etc. beigemengt werden.

Das Einspritzen des flüssigen Kunststoffmaterials wird solange fortgeführt, bis alle Hohlräume in der Form gefüllt sind. In der Form stellt sich ein hydrostatischer Druck, also ein quasi statischer Druck ein. Im Anschluss daran erfolgt das Härten des Kunststoffs. Werden thermoplastische Kunststoffe eingesetzt, wird die Form beziehungsweise das erhaltene Bauteil abgekühlt. Das Abkühlen erfolgt vorzugsweise unter Aufrechterhalten des Druckes in der Form.

In einer bevorzugten Ausführungsform der vorliegenden Erfindung wird das hergestellte Bauteil in der Form von außen nach innen abgekühlt. Hierdurch kann erreicht werden, dass ein Volumenschwund, der beim Abkühlen der Schmelze auftreten kann, durch Nachfließen weiterer Schmelze von innen ausgeglichen werden kann.

Bei Verwendung von Kunststoffvorprodukten erfolgt das Aushärten durch die Polymerisationsreaktion..

Das erfindungsgemäße Verfahren ist zur Herstellung von beliebigen Bauteilen geeignet. Es können Bauteile hergestellt werden, die einer hohen Zug- und Druckbelastung ausgesetzt sind. Beispiele für Bauteile, die hergestellt werden können sind Hohlkörper, Fahrzeugteile, z.B. für Lkws, etc. Beispiele für derartige Fahrzeugteile sind Druckbehälter, Antriebswellen, Blattfedern oder Federlenker für die Führung der Fahrzeugachse.

Es hat sich gezeigt, dass es mit dem erfindungsgemäßen Verfahren möglich ist, eine mehr als 5 mm dicke Wicklung aus reinen, nicht vorgetränkten Verstärkungsfasern mit einem hochviskosen Kunststoff bzw. Kunststoffvorprodukt vollständig zu tränken.

Die erfindungsgemäß hergestellten Bauteile weisen insbesondere bei einer hohen Viskosität des flüssigen Kunststoffs und/oder Kunststoffvorproduktes eine von innen nach außen, d.h. in Richtung des Durchtränkungsprozesses, zunehmende Faserdichte auf.

Ein weiterer Gegenstand der vorliegenden Erfindung sind Hohlkörper aus faserverstärktem Kunststoff, dadurch gekennzeichnet, daß sie einen von innen nach außen zunehmenden Anteil an Fasern pro Volumeneinheit aufweisen.

Durch den hohen Druck, mit dem der flüssige Kunststoff eingespritzt wird, zusammen mit dem hohe Durchtränkungswiderstand der Faserwicklung wird die Faserwicklung von innen nach außen aufgeweitet. Hierdurch kann am Innenumfang ein Bereich aus reinem Kunststoff entstehen, so dass der Faservolumenanteil hier örtlich gleich Null ist. Da die Faserwicklung von der Innenoberfläche des Bauteils zur Außenoberfläche hin verdrängt wird, nimmt die Faserdichte von innen nach außen zu, so daß der Anteil an Fasern pro Volumenanteil in Richtung Außenoberfläche kontinuierlich bis zu seinem Maximalwert an der Außenoberfläche ansteigt. Es stellt sich somit ein Gradient der Faserdichte über die Wanddicke ein.

Die vorliegende Erfindung wird anhand der nachfolgenden Figuren erläutert. Es zeigen
Figur 1 einen Schnitt durch ein Versuchswerkzeug und
Figur 2 Schnitt durch ein Werkzeug zur Herstellung von offenen Hohlkörpern.

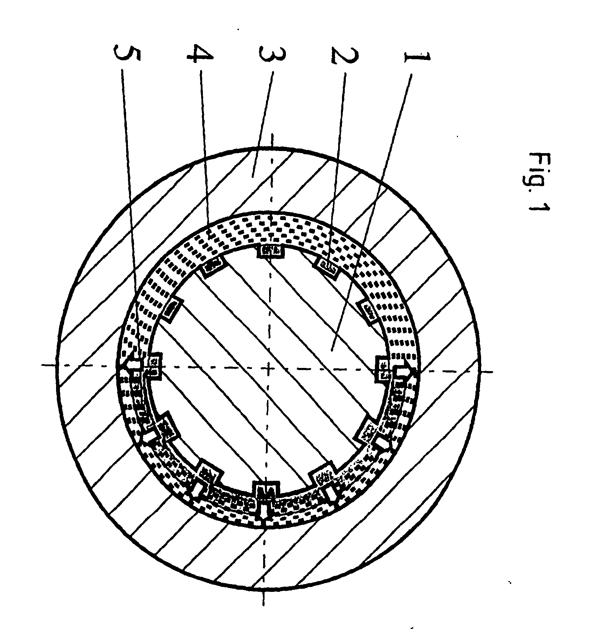

Mit dem in Figur 1 dargestellten Versuchswerkzeug können zylindrische Hohlkörper mit einer Wanddicke von 2 bis 50 mm hergestellt werden.

Das Werkzeug besteht aus einem Innenwerkzeug (Wickelkern) 1, welcher in der hier dargestellten Ausführungsform axial verlaufende Längsnuten 2 aufweist, und einem als Form dienenden Außenwerkzeug 3. Der Wickelkern 1 und das Außenwerkzeug 3 bilden gemeinsam eine ringförmige Kammer, den Formraum, für die Aufnahme der Fasern 4, d.h. des Laminats. Über die Längsnuten 2 schießt das flüssige Kunststoffmaterial, z. B. eine Thermoplastschmelze, in die Kammer und dringt dann radial und damit senkrecht zur Faserwicklung 4 von innen nach außen in die Faserwicklung 4, d.h. in das Laminat, ein. Die Tränkung mit Kunststoffmaterial wird in Fig. 1 durch eine hellgraue Färbung 5 dargestellt.

Die hier dargestellten Längsnuten 2 erleichtern die Verteilung und das axiale Vorschiessen des Kunststoffmaterials, sind jedoch für das Erreichen der erfindungsgemäßen Wirkung nicht unbedingt erforderlich: Bei einer geeigneten Anspritzweise, z. B. wenn nur im Anspritzbereich eine Nut o. ä. vorliegt, baut sich durch die beschriebene Aufweitung der Faserwicklung ein Ringspalt auf, in welchem das flüssige Kunststoffmaterial in die Kammer vorschießen kann.

Das Kunststoffmaterial wird mittels einer hier nicht dargestellten Fördereinrichtung, wie einem Extruder, einer Spritzgießmaschine oder Kolben usw., gefördert und der erforderliche Druck erzeugt. Durch die Viskosität des flüssigen Kunststoffmaterials und den hohen Durchtränkungswiderstand der Faserwicklung 4 wird ein radialer Preß- oder Konsolidierungsdruck auf die Faserwicklung gebracht.

Die Form 3 (Außenwerkzeug) ist in der hier dargestellten Ausführungsform bis auf eine Öffnung für das Einbringen des Kunststoffmaterials geschlossen, so dass nach Abschluß des Tränkungsvorganges ein hydrostatischer Druckzustand aufrechterhalten werden kann. Wird bei Verwendung einer Thermoplastschmelze im Anschluss an den Konsolidierungsprozess das Bauteil von außen nach innen abgekühlt, kann ein gegebenenfalls auftretender Volumenschwund durch Nachfließen weiterer Schmelze von innen ausgeglichen werden. Auf diese Weise werden hohe, lunkerfreie Laminatqualitäten erhalten. Eine weitere Verbesserung der Laminatqualität kann dadurch erhalten werden, wenn das gesamte Werkzeug während des Aufheizvorganges und vor Beginn des Tränkungsvorganges evakuiert wird. Dadurch können ein oxidativer Abbau der Kunststoffmaterialien und Lufteinschlüsse weitgehend vermieden werden.

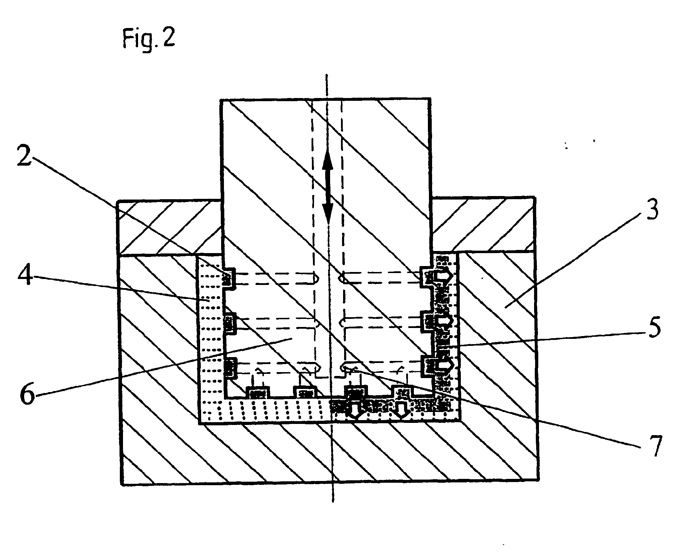

In Figur 2 ist eine mögliche Weiterbildung des erfindungsgemäßen Verfahrens zur Herstellung von offenen Hohlkörpern dargestellt. Das Werkzeug besteht in der in Figur 2 dargestellten Ausführungsform aus einem axial beweglichen Preßstempel 6 und dem Außenwerkzeug 3. Der Preßstempel 6 ist mit ringförmig angeordneten Nuten 2 versehen, die durch Verteilerkanäle 7 gespeist werden. Das Belegen des Kerns mit Fasern erfolgt durch Einlegen der Fasern, beispielsweise als fertige Gewebe oder Gelege 4. Anschließend wird das Außenwerkzeug 3 geschlossen und gegebenenfalls evakuiert. Das Kunststoffmaterial wird über die Nuten 2 eingeschossen. Auch in der hier dargestellten Ausführungsform erfolgt das Vordringen des flüssigen Kunststoffmaterials senkrecht zur Wicklung 4, so dass der Preßdruck auf alle Bereiche der Wicklung beziehungsweise des Laminats gleich ist. Die Konsolidierung beziehungsweise Tränkung des Laminats ist hier durch eine graue Färbung 5 dargestellt.

Auch in dieser Ausführungsform sind die Nuten nicht unbedingt erforderlich: Durch die beschriebene Verdichtung der Faserwicklung bildet sich ausgehend von den Verteilerkanälen 7 im Preßstempel 6 ein Bereich, in welchem der Kunststoff in flüssiger Form vorliegt, d.h. noch nicht ausgehärtet ist, über welchen eine gleichmäßige flächige Verteilung des flüssigen Kunststoffmaterials sichergestellt wird.

### Bezugszeichenliste:

- 1: Innenwerkzeug (Wickelkern) 1
- 2: Nuten
- 3: Außenwerkzeug
- 4: Faserwicklung
- 5: hellgraue Färbung
- 6: Preßstempel
- 7: Verteilerkanäle

## Patentansprüche

1. Verfahren zur Herstellung von Bauteilen aus faserverstärktem Kunststoff bei dem
- ein mit Fasern belegter Kern in eine Form eingebracht wird und
- Kunststoff oder Kunststoffvorprodukte in flüssiger Form über den Kern im wesentlichen senkrecht zu den Fasern in den Formraum eingeleitet wird,
- der eingebrachte Kunststoff aushärtet und das Bauteil aus der Form entfernt wird.

2. Verfahren nach Anspruch 1, **dadurch gekennzeichnet, dass** die Fasern auf dem Kern geschichtet sind, oder dieser mit den Fasern umwickelt ist.

3. Verfahren nach Anspruch 1 oder 2, **dadurch gekennzeichnet, dass** die Fasern ausgewählt sind aus natürlichen und synthetischen Fasern auf Köhlenhydrat- oder Aminosäurebasis, Kohlenstofffasern, Glasfasern, Aramidfasern, keramische Fasern, wie Siliciumcarbid, Bornitrit und Silikatfasern, Fasern aus Polyetherketon, vollaromatischen Polyamiden, Polyethylen, Polypropylen, Polybutylenterephthalat, Polyamid, Polysulfon, Polyetherketon sowie beliebige Kombinationen der Voranstehenden.

4. Verfahren nach einem der Ansprüche 1 bis 3, **dadurch gekennzeichnet, dass** der Kunststoff ausgewählt ist aus thermoplastischen Kunststoffen, wie abgewandelten Naturstoffen, Polyamid, Polycarbonat, Polyester, Polyphenylenoxid, Polysulfon, Polyvinylacetal, Polyolefinen, Ionomeren, Polyvinylchlorid (PVC), Polyvinylidenchlorid, Polymethylmethacrylat, Polyacrylnitril, Polystyrol, Polyacetalen, Fluorkunststoffen, Polyvinylalkohol, Polyvinylacetat, Poly-p-xylylen, Polyetherketonen, Acrylnitril-Butadien-Styrol-Copolymeren, Styrol-Acrylnitril-Copolymeren, Polyterephthalaten, linearen Polyurethanen, chlorierten Polyethern und/oder Duroplasten, insbesondere Gießharzen, wie Epoxidharze, Methacrylatharze, ungesättigten Polyesterharze, Isocyanatharze und Phenacrylatharze, und aus Prepolymeren herstellbaren Phenolharzen, Melamin-Formaldehydharzen; vernetzten und linearen Polyurethanen und beliebigen Gemischen der voranstehenden.

5. Verfahren nach einem der Ansprüche 1 bis 4, **dadurch gekennzeichnet, dass** als Fasern Hybridfasern aus Verstärkungs- und Thermoplastfasern, thermoplastische Prepregs oder duroplastische Prepregs eingesetzt werden.

6. Verfahren nach einem der Ansprüche 1 bis 5, **dadurch gekennzeichnet, dass** der Kunststoff bzw. Kunststoffvorprodukt . Funktionskunststoffe, die tribologischen Eigenschaften verändernde Additive und/oder abrasive Additive enthält.

7. Verfahren nach einem der Ansprüche 1 bis 6, **dadurch gekennzeichnet, dass** der Kern hohl ist und der Kunststoff bzw das Kunststoffvorprodukt über den Kern zugeführt wird.

8. Verfahren nach einem der Ansprüche 1 bis 7, **dadurch gekennzeichnet, dass** der Kern Zufuhrkanäle aufweist, die in Nuten münden, welche über den Kern verteilt sind.

9. Verfahren nach einem der Ansprüche 1 bis 8, **dadurch gekennzeichnet, dass** der mit Fasern belegte Kern in eine Druckform eingebracht ist.

10. Verfahren nach einem der Ansprüche 1 bis 9, **dadurch gekennzeichnet, dass** der Kunststoff bzw. das Kunststoffvorprodukt mit einem Druck von 5 bis 1.000 bar zugeführt wird.

11. Verfahren nach einem der Ansprüche 1 bis 10, **dadurch gekennzeichnet, dass** der Kern und/oder die Form beheizt werden.

12. Verfahren nach Anspruch 11, **dadurch gekennzeichnet, dass** die Beheizung über eine Widerstandsheizung, Strahlenheizung oder Hochfrequenzheizung erfolgt.

13. Verfahren nach einem der Ansprüche 1 bis 12, **dadurch gekennzeichnet, dass** das erhaltene Bauteil in der Form abgekühlt wird, wobei der Druck in der Form aufrechterhalten wird.

14. Verfahren nach einem der Ansprüche 1 bis 13, **dadurch gekennzeichnet, dass** das erhaltene Bauteil von außen nach innen abgekühlt wird.

15. Hohlkörper aus faserverstärktem Kunststoff, erhalten durch das Verfahren nach Anspruch 1, **gekennzeichnet dadurch, dass** der Anteil der Fasern pro Volumenanteil von innen nach außen zunimmt.

16. Hohlkörper nach Anspruch 15, **dadurch gekennzeichnet, dass** das Bauteil ein Druckbehälter, eine Antriebswelle, eine Blattfeder oder ein Federlenker ist.

## Claims

1. Method for producing components from fibre-reinforced plastic, in which
- a core surrounded by fibres is introduced into a mould and
- plastic or plastic precursors is/are fed into the mould space in liquid form over the core essentially perpendicular to the fibres,
- the plastic that has been introduced is cured and the component is removed from the mould.

2. Method according to Claim 1, **characterized in that** the fibres are layered onto the core, or the latter is wound round by the fibres.

3. Method according to Claim 1 or 2, **characterized in that** the fibres are selected from natural and synthetic fibres based on carbohydrate or amino acid, carbon fibres, glass fibres, aramid fibres, ceramic fibres, such as silicon carbide, boron nitrite and silicate fibres, fibres of polyether ketone, fully aromatic polyamides, polyethylene, polypropylene, polybutylene terephthalate, polyamide, polysulphone, polyether ketone and any combinations of the above.

4. Method according to any of Claims 1 to 3, **characterized in that** the plastic is selected from thermoplastics, such as modified natural substances, polyamide, polycarbonate, polyester, polyphenylene oxide, polysulphone, polyvinyl acetal, polyolefins, ionomers, polyvinyl chloride (PVC), polyvinylidene chloride, polymethyl methacrylate, polyacrylonitrile, polystyrene, polyacetals, fluoroplastics, polyvinyl alcohol, polyvinyl acetate, poly-p-xylylene, polyether ketones, acrylonitrile-butadiene-styrene copolymers, styreneacrylonitrile copolymers, polyterephthalates, linear polyurethanes, chlorinated polyethers and/or thermosets, in particular casting resins such as epoxy resins, methacrylate resins, unsaturated polyester resins, isocyanate resins and phenacrylate resins, and phenol resins which can be produced from prepolymers, melamine-formaldehyde resins, crosslinked and linear polyurethanes and any mixtures of the above.

5. Method according to any of Claims 1 to 4, **characterized in that** the fibres used are hybrid fibres consisting of reinforcing and thermoplastic fibres, thermoplastic prepregs or thermosetting prepregs.

6. Method according to any of Claims 1 to 5, **characterized in that** the plastic or plastic precursor contains functional polymers, additives which alter the tribological properties and/or abrasive additives.

7. Method according to any of Claims 1 to 6, **characterized in that** the core is hollow and the plastic or plastic precursor is fed in over the core.

8. Method according to any of Claims 1 to 7, **characterized in that** the core has feed channels which open out into grooves that are distributed over the core.

9. Method according to any of Claims 1 to 8, **characterized in that** the core surrounded by fibres is introduced into a pressure mould.

10. Method according to any of Claims 1 to 9, **characterized in that** the plastic or plastic precursor is fed in at a pressure of 5 to 1000 bar.

11. Method according to any of Claims 1 to 10, **characterized in that** the core and/or the mould is heated.

12. Method according to Claim 11, **characterized in that** the heating is effected by means of resistance heating, radiation heating or high-frequency heating.

13. Method according to any of Claims 1 to 12, **characterized in that** the component obtained is cooled in the mould, with the pressure in the mould being maintained.

14. Method according to any of Claims 1 to 13, **characterized in that** the component obtained is cooled from the outside in.

15. Hollow body made of fibre-reinforced plastic, obtained by means of the method according to Claim 1, **characterized in that** the amount of fibres per unit volume increases from the inside out.

16. Hollow body according to Claim 15, **characterized in that** the component is a pressure vessel, a drive shaft, a leaf spring or a spring bar.

## Revendications

1. Procédé de fabrication de pièces en matière synthétique renforcée par fibres, dans lequel
- un noyau revêtu de fibres est posé dans un moule et
- la matière synthétique ou les ébauches en matière synthétique sont introduits sous forme liquide dans le moule sur le noyau, sensiblement perpendiculairement aux fibres,
- la matière synthétique introduite durcit et la pièce est retirée hors du moule.

2. Procédé selon la revendication 1, **caractérisé en ce que** les fibres sont déposées en couches sur le noyau ou les fibres sont enroulées autour de celui-ci.

3. Procédé selon la revendication 1 ou 2, **caractérisé en ce que** les fibres sont choisies parmi des fibres naturelles et synthétiques à base d'hydrate de carbone ou à base d'aminoacide, des fibres de carbone, des fibres de verre, des fibres aramides, des fibres céramiques, telles que le carbure de silicium, le nitrure de bore et des fibres silicates, des fibres en polyéthercétone, polyamides tout aromatiques, polyéthylène, polypropylène, polybutène-téréphtalate, polyamide, polysulfone, polyéthercétone, ainsi que n'importe quelle combinaison des matières précédentes.

4. Procédé selon l'une quelconque des revendications 1 à 3, **caractérisé en ce que** la matière plastique est choisie parmi les matières thermoplastiques, telles que des matières naturelles modifiées, le polyamide, le polycarbonate, le polyester, l'oxyde de polyphénylène, le polysulfone, polyacétate de vinyle, les polyoléfines, les ionomères, le chlorure de polyvinyle (PVC), le chlorure de polyvinylidène, le polyméthacrylate de méthyle, le polyacrylonitrile, le polystyrène, les polyacétals, les matières synthétiques fluorées, l'alcool polyvinylique, le polyacétate de vinyle, le poly-p-xylylène, les polyéthercétones, les copolymères d'acrylnitrile-butadiène-styrène, les copolymères styrène-acrylnitrile, les polytéréphtalates, les polyuréthannes linéaires, les polyéthers chlorés et/ou les matières plastiques thermodurcissables, en particulier les résines de coulée, telles que les résines époxydes, les résines méthacrylates, des résines polyesters insaturées, des résines isocyanates et des résines de phénacrylate, et des résines de phénol réalisées à partir de prépolymères, des résines de mélamine-formaldéhyde, des polyuréthannes réticulés et linéaires et n'importe quel mélange des matières précédentes.

5. Procédé selon l'une quelconque des revendications 1 à 4, **caractérisé en ce que** les fibres utilisées sont des fibres hybrides à partir de fibres de renfort et de fibres thermoplastiques, des préimprégnés thermoplastiques ou des préimprégnés en matière plastique thermodurcissables.

6. Procédé selon l'une quelconque des revendications 1 à 5, **caractérisé en ce que** la matière synthétique ou l'ébauche en matière synthétique contient des matières synthétiques fonctionnelles qui contiennent des additifs modifiant les propriétés tribologiques et/ou des additifs abrasifs.

7. Procédé selon l'une quelconque des revendications 1 à 6, **caractérisé en ce que** le noyau est creux et la matière synthétique ou l'ébauche en matière synthétique est acheminé sur le noyau.

8. Procédé selon l'une quelconque des revendications 1 à 7, **caractérisé en ce que** le noyau comporte des canaux d'admission, qui débouchent dans des rainures qui sont réparties sur le noyau.

9. Procédé selon l'une quelconque des revendications 1 à 8, **caractérisé en ce que** le noyau revêtu de fibres est posé dans un moule sous pression.

10. Procédé selon l'une quelconque des revendications 1 à 9, **caractérisé en ce que** la matière synthétique ou l'ébauche en matière synthétique est acheminé avec une pression de 5 à 1 000 bar.

11. Procédé selon l'une quelconque des revendications 1 à 10, **caractérisé en ce que** le noyau et/ou le moule sont chauffés.

12. Procédé selon la revendication 11, **caractérisé en ce que** le chauffage est effectué au moyen d'un chauffage ohmique, d'un chauffage radiant ou d'un chauffage à haute fréquence.

13. Procédé selon l'une quelconque des revendications 1 à 12, **caractérisé en ce que** la pièce obtenue est refroidie dans le moule, la pression étant maintenue dans le moule.

14. Procédé selon l'une quelconque des revendications 1 à 13, **caractérisé en ce que** la pièce obtenue est refroidie de l'extérieur vers l'intérieur.

15. Corps creux en matière synthétique renforcée par des fibres, obtenu par le procédé selon la revendication 1, **caractérisé en ce que** la teneur en fibres par volume augmente de l'intérieur vers l'extérieur.

16. Corps creux selon la revendication 15, **caractérisé en ce que** la pièce est un réservoir sous pression, un arbre d'entraînement, un ressort à lames ou un bras de suspension.
